# EUROPÄISCHE PATENTSCHRIFT

(11) **EP 0 582 142 B1**
(45) Veröffentlichungstag und Bekanntmachung des Hinweises auf die Patenterteilung: **21.10.1998**
(21) Anmeldenummer: 93111746.9
(22) Anmeldetag: 22.07.1993
(51) Int. Cl.: C08B 5/08, C08B 5/04, C06B 21/00

(54) **Verfahren zur Herstellung einer lagerstabilen niedrigveresterten alkohol- oder wasserfeuchten Nitrocellulose**
Process for producing a storage-stable, low esterified, nitrocellulose moistened with alcohol or water
Procédé de préparation de nitrocellulose faiblement esterifiée, impregnée d'eau ou d'alcool et stable au stockage

(30) Priorität: 04.08.1992 DE 4225761
(43) Veröffentlichungstag der Anmeldung: 09.02.1994
(73) Patentinhaber: Wolff Walsrode Aktiengesellschaft, D-29655 Walsrode (DE)
(72) Erfinder: Hoppe, Lutz, Dr., D-29664 Walsrode (DE); Haase, Bernd, Dr., D-29664 Walsrode (DE); Brauer, Oke, Dr., D-29664 Walsrode (DE); Szablikowski, Klaus, Dr., D-29664 Walsrode (DE)
(74) Vertreter: Hellfeldt, Kurt, Dr.

(56) Entgegenhaltungen:
- EP-A- 0 084 153
- DE-A- 1 063 506
- GB-A- 871 299

## Beschreibung

Die vorliegende Erfindung betrifft ein Verfahren zur Herstellung von Nitrocellulose bestimmter Eigenschaften durch Komprimieren mit Hilfe gegenläufiger Walzen.

Niedrigveresterte Nitrocellulosen mit bis zu 12,6 % Stickstoffgehalt, die vorwiegend in der Lackindustrie Verwendung finden, werden durch Veresterung von Cellulosen mit Nitriersäuren, die gewöhnlich aus einem Gemisch von Salpetersäure, Schwefelsäure und Wasser bestehen, hergestellt.

Nachdem die Nitriersäure, meist durch intensive Wasserwäsche, entfernt und durch einen thermischen Abbauprozeß die gewünschte Molmasse der Nitrocellulose eingestellt wurde, muß zur Vermeidung von Entzündungen die so gewonnene Nitrocellulose, die von fasriger Struktur ist, phlegmatisiert werden. Hierzu finden unterschiedlichste Phlegmatisierungsmittel Verwendung.

Neben dem Einmischen von Weichmachern ist die Anfeuchtung der Nitrocellulose mit Alkoholen und/oder Wasser das gebräuchlichste Verfahren. Die Nitrocellulosen werden üblicherweise mit Feuchtigkeitsgehalten von Alkohol und/oder Wasser mit 30 bzw. 35 % in den Handel gebracht. Wird ein Anfeuchtungsgrad von 25 % unterschritten, sind diese niedrigveresterten Nitrocellulosen aufgrund des gestiegenen Gefährdungspotentiales als "Explosive Stoffe" zu behandeln (Anlage A zur Gefahrgutverordnung Straße / zum ARD B I- Anl. 1.2). Trotz dieser Phlegmatisierung verbleibt in der Praxis eine gewisse Gefährdung hinsichtlich der in Trommeln oder Kartonagen sowohl gelagerten, wie zum Versand gebrachten niedrig veresterten Nitrocellulosen.

So ist ein Prozeß zur Behandlung fasriger Nitrocellulosen bekannt, um sie für den Transport und die Lagerung sicherer zu machen (GB PS 871 299). Hierbei wird auf die feuchte, fasrige Nitrocellulose eine sie komprimierende Kraft P = 2M + 6400 ausgeübt, wobei P die Kraft in pound per square inch und M die mittlere Faserlänge der Nitrocellulose in microns ist. Die Kraft wird durch zwei ohne Abstand arbeitende gegenläufige Walzen aufgebracht.

Wird die so behandelte und vergleichsweise unbehandelte fasrige Nitrocellulose mit 30 % Isopropanolanfeuchtung in Stahltrommeln eingefüllt und zur Entzündung gebracht, so soll das behandelte Material nur teilweise mit einer milden Flamme abbrennen, während es bei dem unbehandelten Material bereits nach 1/12 Minuten zu einem heftigen Ausbruch kommt, und die Flammen gelöscht werden müssen.

Diesem bekannten Prozeß haftet aber den Nachteil an, daß es trotz der empfohlenen Behandlung bei der Lagerung der fasrigen Nitrocellulose in der Verpackung, sei es in einer Trommel oder einer Kartonage, nach einem Zeitraum von zwei bis sechs Wochen, die für eine Lagerung durchaus üblich sind, zu Entmischungen innerhalb der angefeuchteten Nitrocellulose kommt. Das Anfeuchtungsmittel, Alkohol und/oder Wasser sackt in den Bodenbereich ab, woraus eine unzulässige Austrocknung der fasrigen Nitrocellulose im oberen Bereich des Verpackungsstückes resultiert.

So fordern die Sprengstofflager-Richtlinien [Bek. des BMA vom 8.Juli 1991 - IIIb4-35205-10 im Bundesarbeitsblatt 11/1991, S. 43, Pkt. 4.3 (3)] ein regelmäßiges Wenden der Packstücke als geeignete Gegenmaßnahme gegen ein Entmischen. Das Merkblatt der Berufsgenossenschaft der chemischen Industrie (MO37 4/84 S.6) fordert zur Vermeidung einer Gefährdung durch austrocknende Schichten ein Wenden der Lagerbehälter in Zeitabständen von 14 Tagen. Das bedeutet einen sehr hohen und unwirtschaftlichen Aufwand.

Ein Grund für das eingeschränkte Wirken des zweifelsohne günstigen Effektes einer Verdichtung der fasrigen Nitrocellulose auf ein Verhindern der Austrocknung der Nitrocellulose im oberen Teil der Verpackung liegt auch darin, daß zum Erreichen eines hohen Füllgrades in der Verpackung, die Nitrocellulose in diese Verpackungen zusätzlich eingestampft wird, wobei das verdichtete Material zum Teil wieder zerstört wird.

Es wurde nun ein Verfahren zur Herstellung einer lagerstabilen niedrigveresterten, mit Alkoholen und/oder Wasser angefeuchteten Nitrocellulose mittels Komprimieren durch gegenläufige Walzen gefunden, dadurch gekennzeichnet, daß bei einem Liniendruck von 4 bis 10 t/cm zwischen den auf die fasrige Nitrocellulose einwirkenden Walzen und Drehzahlverhältnissen der beiden Walzen von 1:1,1 bis 1:3, eine solche Friktion zwischen den beiden Walzen eingestellt wird, die sich in einer Differenz der Leistungsaufnahme der beiden Walzen von 5 bis 100 Watt/kg Nitrocellulose ausdrückt.

Vorzugsweise beträgt der Liniendruck zwischen den Walzen 4 bis 8 t/cm. Es hat sich bei dem erfindungsgemäßen Verfahren als vorteilhaft erwiesen, wenn die durch die Friktion auftretende Friktionswärme über ein Kühlmedium, das durch die Walzen strömt, abgeführt wird.

Nach dem erfindungsgemäßen Verfahren gelingt es, die für die Lagerung, den Transport, aber auch die spätere Verarbeitung so gefährliche Entfeuchtung der Nitrocellulose durch auftretende Entmischungen des Anfeuchtungsmittels im Packstück nahezu vollkommen auszuschließen.

Sogar bei den hochviskosen, langfasrigen Nitrocellulosetypen, die insbesonders zu einer schnellen Entmischung vor allem in hohen Packstücken neigen, konnte im Anschluß an die nach dem erfindungsgemäßen Verfahren vorgenommene Behandlung der Nitrocellulose, keine nennenswerte Entfeuchtung der Nitrocelluloseschichten im Packstück festgestellt werden.

Ein weiterer, nicht zu unterschätzender Vorteil ist, daß die nach dem erfindungsgemäßen Verfahren hergestellte Nitrocellulose eine freifließende Konsistenz hat, was die Entleerung der Packstücke beträchtlich erleichtert.

War es bisher so, daß zum Erreichen wirtschaftlicher Füllgewichte in den Verpackungsstücken die Nitrocellulose in diese eingestampft werden mußte, kann die nach dem erfindungsgemäßen Verfahren erzeugte Nitrocellulose ohne zusätzliches Stampfen in die Verpackungsstücke eingefüllt werden, wobei noch höhere Füllgewichte erreicht werden, als bei einer eingestampften Nitrocellulose.

Den Einfluß der Behandlung der Nitrocellulose nach dem erfindungsgemäßen Verfahren auf die so sicherheitsrelevante Entfeuchtung der Nitrocellulose in den Packstücken zeigen die nachstehenden Beispiele (%-Angaben beziehen sich auf Gew.-%).

## Patentansprüche

1. Verfahren zur Herstellung einer lagerstabilen niedrigveresterten (mit einem Stickstoffgehalt von weniger als 12,6 %) mit Alkoholen und/oder Wasser angefeuchteten Nitrocellulose mittels Komprimieren durch gegenläufige Walzen, dadurch gekennzeichnet, daß bei einem Liniendruck von 4 bis 10 t/cm zwischen den auf die fasrige Nitrocellulose einwirkenden Walzen solche Friktion zwischen den Walzen eingestellt wird, die sich in einer Differenz der Leistungsaufnahme der beiden Walzen von 5 bis 100 Watt/kg Nitrocellulose ausdrückt.

2. Verfahren nach Anspruch 1, dadurch gekennzeichnet, daß die auftretende Friktionswärme über ein durch die Walzen strömendes Kühlmedium abgeführt wird.

3. Verfahren nach Anspruch 1 und 2, dadurch gekennzeichnet, daß die Walzen einen unterschiedlichen Durchmesser besitzen.

4. Verfahren nach Ansprch 1 bis 3, dadurch gekennzeichnet, daß der Liniendruck zwischen den Walzen 4 bis 8 t/cm beträgt.

5. Nitrocellulose, hergestellt nach einem Verfahren gemäß einem der Ansprüche 1 bis 4.

## Claims

1. A process for producing a nitrocellulose having a low degree of esterification (having a nitrogen content less than 12.6 %), which is moistened with alcohols and/or water, and which is stable on storage, by means of compression by counter-rotating rollers, characterised in that at a linear pressure of 4 to 10 t/cm between the rollers acting on the fibrous nitrocellulose friction is generated between the rollers and is manifested as a difference in the power consumption of the two rollers of 5 to 100 watt/kg nitrocellulose.

2. A process according to claim 1, characterised in that the frictional heat generated is dissipated via a cooling medium flowing through the rollers.

3. A process according to claims 1 and 2, characterised in that the rollers are of different diameters.

4. A process according to claims 1 to 3, characterised in that the linear pressure between the rollers is 4 to 8 t/cm.

5. Nitrocellulose produced by the process according to any one of claims 1 to 4.

## Revendications

1. Procédé de préparation d'une nitrocellulose à faible taux d'estérification (à une teneur en azote inférieure à 12,6 %), stable à la conservation, humidifiée par des alcools et/ou de l'eau, par compression entre des cylindres tournant en sens inverse, caractérisé en ce que, à une pression linéaire de 4 à 10 t/cm entre les cylindres agissant sur la nitrocellulose fibreuse, on règle entre les cylindres un frottement correspondant à une différence de puissance absorbée des deux cylindre qui va de 5 à 100 W/kg de nitrocellulose.

2. Procédé selon la revendication 1, caractérisé en ce que la chaleur de frottement est évacuée à l'aide d'un agent réfrigérant s'écoulant au travers des cylindres.

3. Procédé selon les revendications 1 et 2, caractérisé en ce que les cylindres ont des diamètres différents.

4. Procédé selon les revendications 1 à 3, caractérisé en ce que la pression linéaire entre les cylindres est de 4 à 8 t/cm.

5. Nitrocellulose préparée par un procédé selon l'une des revendications 1 à 4.
